# FASCICULE DE BREVET EUROPEEN

(11) **EP 1 328 169 B1**
(45) Date de publication et mention de la délivrance du brevet: **06.05.2004**
(21) Numéro de dépôt: 01980635.5
(22) Date de dépôt: 23.10.2001
(51) Int. Cl.: A23P 1/04, A23L 1/29, A23L 1/305

(54) **ALIMENT COMPLET OU SUPPLEMENT NUTRITIONNEL A HAUTE VALEUR ENERGETIQUE, SON PROCEDE DE PREPARATION ET SES UTILISATIONS**
NAHRUNGSMITTEL ODER NAHRUNGSERGÄNZUNGSMITTEL MIT HOHEM ENERGIEWERT, VERFAHREN ZU DESSEN HERSTELLUNG UND SEINE VERWENDUNGEN
HIGH ENERGY COMPLETE FOOD OR NUTRITIONAL SUPPLEMENT, METHOD FOR PREPARING SAME AND USES THEREOF

(30) Priorité: 26.10.2000 FR 0013731
(43) Date de publication de la demande: 23.07.2003
(73) Titulaire: Nutriset, 76770 Malaunay (FR); Institut de Recherche pour le Développement ( IRD), 75480 Paris Cedex 10 (FR)
(72) Inventeur: BRIEND, André, F-75480 Paris Cedex 10 (FR); LESCANNE, Michel, F-76770 Malaunay (FR)
(74) Mandataire: Touati, Catherine
(86) Numéro de dépôt international: PCT/FR2001/003288
(87) Numéro de publication internationale: WO 2002/034077

(56) Documents cités:
- EP-A- 0 745 330
- FR-A- 2 114 566
- FR-A- 2 771 259
- GB-A- 979 466
- US-A- 4 016 337
- US-A- 4 112 123

## Description

L'invention concerne des aliments riches en énergie, à basse osmolalité, destinés à être consommés tels quels, sans addition d'eau, contenant au plus 10% de leur poids en eau, qui apportent tous les nutriments, et en particulier des protéines d'origine laitière, des lipides, des glucides, tous les éléments minéraux et toutes les vitamines nécessaires à la nutrition humaine. Les aliments conformes à l'invention sont considérés comme des aliments complets car ils permettent à eux seuls de couvrir la totalité des besoins nutritionnels d'un sujet.

L'invention concerne également des suppléments nutritionnels apportant tous les nutriments présents en quantité insuffisante dans les régimes où un aliment unique, le plus souvent un aliment à base de céréales, constitue l'essentiel de la ration alimentaire.

L'invention a également pour objet le procédé de préparation de ces aliments ainsi que leurs utilisations.

Des aliments en poudre préparés à partir de produits laitiers en poudre mélangés à des glucides, des matières grasses végétales et des vitamines et des minéraux sont souvent utilisés pour nourrir les enfants. Ces produits en poudre doivent être dissous dans de l'eau avant consommation. Quand ils sont destinés aux enfants en bas âge, ces produits en poudre doivent avoir des caractéristiques nutritionnelles respectant la norme internationale décrite dans le Codex Alimentarius, CODEX STAN 156-1987 (amendée en 1989)

Des formules spécifiques se présentant également sous forme de poudre à diluer dans de l'eau avant consommation sont utilisées pour réalimenter les sujets souffrant de dénutrition sévère. Ces aliments sont également préparés à partir de produits lactés en poudre (lait écrémé, lactosérum) mélangés à des glucides, des vitamines, des minéraux et lipides. Les produits les plus couramment utilisés actuellement pour cette utilisation sont désignés sous le terme de formules F75 et F100. Leur composition nutritionnelle est décrite dans "Management of severe malnutrition - A manual for physicians and senior health workers." (Genève, Organisation Mondiale de la Santé, 1999, p 13-14).

Leur appellation rappelle qu'après dilution ils amènent respectivement 75 et 100 kcal/100 ml.

Qu'ils soient destinés à l'alimentation d'enfants sains ou d'enfants dénutris, les produits en poudre présentent cependant un certain nombre d'inconvénients.

En premier lieu, les produits en poudre après dilution dans de l'eau représentent un excellent milieu de culture pour les bactéries pathogènes qui rend leur utilisation risquée quand les conditions d'hygiène sont défaillantes, notamment dans les pays pauvres.

Cette dilution dans l'eau impose par ailleurs l'emploi de sels minéraux solubles pour l'enrichissement de ce type d'aliments, les sels insolubles risquant de sédimenter au fond du récipient. Ces sels solubles ont un goût prononcé, et ont fréquemment des propriétés oxydantes plus importantes que les sels insolubles. Il est difficile par ailleurs dans des aliments liquides d'enrober par des substances chimiquement inertes les sels minéraux solubles ayant un goût prononcé et/ou des propriétés pro-oxydantes marquées afin d'en masquer le goût et/ou d'en atténuer la réactivité chimique. En effet, les techniques d'enrobage les plus courantes rendent difficile la mise en suspension stable de ces minéraux qui ont tendance après enrobage à se déposer ou au contraire à remonter en surface quand on tente de les mettre en suspension dans un liquide.

Par ailleurs, la présentation sous forme de poudre de ces aliments classiques augmente leur surface de contact avec l'atmosphère ambiante qui pénètre à l'intérieur de la poudre. Ce phénomène expose ces aliments au risque d'oxydation lors de leur conservation, et ce d'autant plus qu'ils se présentent sous forme de poudre fine.

La présence de minéraux ayant une activité oxydante et la grande surface de contact entre le produit en poudre et l'atmosphère ambiante favorisent l'oxydation des lipides, produisant un rancissement de l'aliment, et également celle des vitamines sensibles à l'oxydation qu'ils peuvent contenir, en particulier des vitamines C, A et E.

Par ailleurs, il est difficile avec les aliments de renutrition classiques en poudre d'atteindre une densité énergétique très supérieure à 100 kcal/100 ml après dilution en raison de l'augmentation de l'osmolalité pouvant monter au delà de 400 mOsm /kg. Ceci constitue un problème majeur car le sujet dénutri ne tolère pas les aliments ayant une osmolalité supérieure à celle du plasma sanguin (290 mOsm/kg environ) qui risquent chez eux d'entraîner des diarrhées.

Enfin, ces différents produits en poudre, sont volumineux lors du stockage, et posent de nombreux problèmes de transport et de manutention.

Les laits concentrés sucrés ont la propriété d'avoir une teneur en eau très faible, et en conséquence, ces laits résistent à la contamination bactérienne. Ces laits ne peuvent pas cependant être utilisés chez l'enfant sans dilution préalable en raison de leur osmolalité extrêmement élevée. Il existe un risque de contamination et prolifération bactérienne lors de cette dilution si celle ci est faite avec une eau contaminée, ce qui rend leur utilisation peu sure quand les conditions d'hygiène sont précaires. Même après dilution ces laits conservent une osmolalité très élevée et très supérieure à la limite de 290 mOsm/kg habituellement respectée pour l'alimentation infantile. Ils ont par ailleurs un rapport entre protides, lipides et glucides très différent de celui des préparations pour enfants en bas âge classiques et également très différent des formules de type F100 ou F75 utilisées en cas de malnutrition. Ces produits sont donc déconseillés actuellement en alimentation infantile et en particulier chez le jeune enfant dénutri.

Afin de pallier aux inconvénients des aliments complets se présentant sous forme de poudre ou basés sur le principe du lait concentré, les inventeurs ont décrit dans la demande de brevet FR 2 771 259 un type d'aliment destiné aux sujets dénutris se présentant sous forme de pâte et préparé en remplaçant dans la formule F100 de l'OMS une partie du lait écrémé par un mélange de lactosérum en poudre et de pâte oléagineuse, de préférence d'arachide.

Ces produits présentaient un progrès par rapport aux produits en poudre habituels. En effet, destinés à être consommés tels quels, sans addition d'eau, ces produits éliminent le risque de la prolifération bactérienne pouvant survenir en cas reconstitution avec une eau contaminée. Par ailleurs, préparés en enrobant les ingrédients ayant un pouvoir osmotique à l'intérieurd'une matière grasse non soluble dans l'eau, ces produits ne développaient pas d'activité osmotique, facilitant ainsi leur utilisation chez l'enfant et chez des sujets dénutris. Ce type de produits cependant présentait encore quelques inconvénients. Tout d'abord, l'inclusion de pâte d'oléagineux dans la préparation a l'inconvénient de donner un aliment ayant une concentration élevée en phytates qui ont la propriété d'inhiber l'absorption de certains minéraux, et notamment du zinc, du fer et du calcium. Les phytates sont une forme de stockage du phosphore présente en forte concentration dans les aliments d'origine végétale, et notamment dans les céréales et les légumineuses, et ayant la propriété de se lier en solution aux cations divalents, les rendant insolubles et difficilement absorbables par le tube digestif. Cet effet sur l'absorption du zinc notamment est un inconvénient majeur étant donné qu'il s'agit d'un oligo-élément qu'il est très important d'apporter sous forme facilement absorbable chez l'enfant, plus particulièrement en cas de malnutrition. Par ailleurs, toutes les graines oléagineuses, et en particulier surtout l'arachide, mais également le soja, ont la propriété de pouvoir déclencher des réactions allergiques chez les sujets sensibilisés. Ces réactions ont un caractère exceptionnel, mais peuvent être plus fréquentes dans certaines régions où ces aliments ne sont pas consommés de façon traditionnelle. Par ailleurs, l'inclusion de graines d'oléagineux riches en matières grasses non raffinées où un début d'oxydation a pu se produire peut initier une réaction d'oxydation des autres matières grasses entrant dans la composition du produit, limitant ainsi la durée de conservation. Enfin, l'inclusion de graines d'oléagineux pour donner une consistance pâteuse à cet aliment nécessite l'introduction dans la composition de l'aliment de glucides non digestibles pouvant chez certains sujets sensibles provoquer une flatulence.

Il existe donc un réel besoin pour des aliments complets et des suppléments nutritionnels de goût agréable, destinés à être consommés directement sans dilution préalable dans l'eau, préparés à partir de produits laitiers, faciles à enrichir en vitamines et minéraux, ayant une haute valeur énergétique, ne contenant comme matière grasse que de la matière grasse raffinée, pouvant contenir des produits sensibles à l'oxydation tels que des vitamines, qui présentent une faible pression osmotique de façon à éviter les effets secondaires de type diarrhée chez le sujet dénutri.

Les inventeurs ont trouvé que de façon surprenante et inattendue, l'ensemble de ces propriétés étaient réunies lorsque la matière grasse végétale enrobant un mélange de produits laitiers en poudre, éventuellement de glucides digestibles et un complément en vitamines et minéraux, l'ensemble constituant l'aliment complet ou le complément nutritionnel, était une matière grasse raffinée ne contenant ni la partie protéique, ni la partie glucidique non digestible, ni la partie minérale de graines d'oléagineux, et avait une viscosité à 37°C comprise entre 180 et 720 kg/hr-m (50 et 200 centipoises), de préférence entre 288 et 648 kg/hr.m (80 et 180 centipoises), plus préférentiellement encore entre 360 et 504 kg/hr.m (100 et 140) centipoises et contenait un émulsifiant, par exemple de la lécithine de soja.

La présente invention a donc pour objet un aliment complet ou un supplément nutritionnel riche en lipides, contenant au plus 10%, de préférence au plus 5% et plus préférentiellement encore au plus 2% de son poids en eau, ayant une basse osmolalité et stable vis-à-vis de l'oxydation, comprenant un mélange de produits de qualité alimentaire sous forme pulvérulente, granulaire ou particulaire, consistant en au moins un produit laitier, éventuellement au moins un produit apportant des glucides digestibles et un complément de vitamines et de sels minéraux, ledit mélange étant enrobé par au moins une substance riche en matière grasse végétale raffinée qui ne contient ni la partie protéique, ni la partie glucidique non digestible, ni la partie minérale de graines d'oléagineux, et qui contient un émulsifiant et éventuellement un anti-oxydant.

Dans la présente invention, on entend par "basse osmolalité" une osmolalité inférieure à 100 mOsm/kg après immersion dans un volume d'eau quatre fois supérieur au volume de l'aliment dont on mesure l'osmolalité.

Dans tout ce qui suit, le terme "matière grasse" désigne une matière grasse raffinée d'origine végétale qui ne contient ni la partie protéique, ni la partie glucidique non digestible, ni la partie minérale de graines d'oléagineux.

Dans la présente invention, la matière grasse enrobe les produits en poudre, granulaire ou particulaire, entrant dans la composition du mélange, alors que dans les produits diététiques à base de produits laitiers actuels, la matière grasse est au contraire enrobée par des glucides ou des protéines rendant possible sa mise en suspension dans de l'eau.

Les aliments préparés selon la présente invention se distinguent fortement de par leurs propriétés physico-chimiques des aliments lactés destinés à être dispersés dans l'eau en raison de cette inversion de phase : l'aliment décrit dans la présente invention est un mélange poudre hydrosoluble dans graisse, contrairement aux produits faciles à disperser dans l'eau qui représentent un mélange de graisses enrobées d'une matière hydrosoluble.

L'enrobage des ingrédients hydrosolubles par une couche de lipides a la propriété de rendre le produit décrit par l'invention insoluble dans l'eau et d'éliminer le pouvoir osmotique des ingrédients solubles dans l'eau. L'approche utilisée pour les aliments décrits dans la présente invention afin d'éliminer l'effet osmotique des ingrédients hydrosolubles est très différente de celle utilisée dans les produits diététiques habituels, ne faisant appel qu'à des ingrédients à faible pouvoir osmotique, tels que des protéines laitières dont les molécules de taille réduite ont été éliminées par ultrafiltration.

Dans la présente invention, l'utilisation de matières grasses d'origine végétale sera préférée en raison de leur meilleure digestibilité par comparaison aux matières grasses d'origine animale. Cette matière grasse sera une matière grasse raffinée et enrichie en émulsifiant, de préférence en lécithine, et plus préférentiellement encore en lécithine de soja, à un taux compris de préférence entre 2% et 5% de la matière grasse, et comprenant éventuellement un antioxydant de qualité alimentaire, préférentiellement du tocophérol.

La matière grasse utilisée peut être un mélange de différentes matières grasses végétales. Son choix dépendra de la viscosité recherchée à 37°C, comprise entre 180 et 720 kg/hr.m (50 et 200 centipoises), de préférence entre 288 et 648 kg/hr.m (80 et 180 centipoises) plus préférentiellement encore entre 360 et 504 kg/hr-m (100 et 140 centipoises). La composition en acides gras précurseurs des acides gras essentiels (séries n-3 et n-6) sera ajustée en fonction des recommandations formulées pour les aliments pour enfants en bas âge ou pour les aliments de renutrition selon l'utilisation prévue.

Les ingrédients apportant des protides dans cette invention sont exclusivement des produits laitiers, qui ont l'avantage de ne pas être associés à des phytates susceptibles d'inhiber l'absorption de certains oligoéléments.

Les produits laitiers sont choisis dans le groupe comprenant notamment le lait écrémé, le yaourt en poudre, la caséine, le lactosérum, et leurs mélanges.

L'aliment complet ou le supplément nutritionnel peut comprendre un produit apportant des glucides digestibles, choisi dans le groupe comprenant notamment les maltodextrines, le saccharose, le glucose, le fructose, le lait écrémé, le lactosérum et leurs mélanges.

L'aliment complet ou supplément nutritionnel selon l'invention est enrichi artificiellement en vitamines, et sels minéraux solubles ou insolubles dans l'eau ou en leurs mélanges, par addition d'un "complément" de vitamines et de sels minéraux. Les vitamines sont des substances parfois instables et les minéraux ont parfois des propriétés oxydantes. Ces vitamines et ces minéraux peuvent être enrobés d'une substance inerte, par exemple par des matières grasses à haut point de fusion ou des alginates de qualité alimentaire les protégeant de l'oxydation dans le cas des vitamines et de certains minéraux ou diminuant ou éliminant leur propriété pro-oxydante dans le cas de certains sels minéraux comme le sulfate de cuivre par exemple.

Comme sels minéraux, on peut utiliser de façon indifférente des sels minéraux solubles ou insolubles dans l'eau, les sels minéraux insolubles ne risquent pas de sédimenter dans cet aliment visqueux non aqueux. Les sels minéraux insolubles présentent l'avantage d'être moins coûteux et insipides. A titre d'exemple de sels minéraux autorisés en alimentation infantile par le Codex alimentarius et fréquemment ajoutés dans les produits diététiques, on peut citer le sulfate de zinc, l'oxyde de zinc, le sulfate de cuivre, le chlorure de potassium, l'oxyde de magnésium et le fumarate de fer.

Selon un mode de réalisation avantageux, l'aliment complet ou le supplément nutritionnel peut contenir en outre des additifs alimentaires choisis dans le groupe comprenant notamment les arômes, les colorants. Ces additifs permettent de conférer à l'aliment complet ou au supplément nutritionnel un caractère plus appétissant facilitant ainsi sa prise.

Selon un mode de réalisation tout à fait avantageux de l'invention, les ingrédients se présentant sous forme pulvérulente ou sous forme particulaire ou granulaire sont enrobés par de la matière grasse végétale contenant de 2 à 5% d'émulsifiant. Cet émulsifiant est de préférence de la lécithine de soja ou tout autre émulsifiant ayant des propriétés physico-chimiques analogues, et notamment des propriétés anti-oxydantes en plus de ses propriétés émulsifiantes.

Selon un mode de réalisation particulier de l'invention, l'aliment complet ou supplément nutritionnel selon l'invention comprend un mélange :
- de 5 à 60%, de préférence de 20 à 50%, et plus préférentiellement encore de 35 à 40% de matières grasses végétales contenant un émulsifiant, de préférence de la lécithine de soja;
- de 5 à 60%, de préférence de 20 à 50%, et plus préférentiellement encore de 35 à 40% de lait écrémé ;
- de 0 à 60%, de préférence de 2 à 30%, et plus préférentiellement encore de 5 à 10% de lactosérum ;
- de 2 à 55%, de préférence de 5 à 35%, et plus préférentiellement encore de 10 à 15% de substances riches en glucides facilement digestibles, par exemple des malto-dextrines,
- de 1 à 15%, de préférence de 2 à 10%, et plus préférentiellement encore de 3 à 5% de saccharose,
lesdits pourcentages étant exprimés en poids par rapport au poids total de l'aliment complet ou du supplément nutritionnel.

Les différents pourcentages seront adaptés en fonction du type de régime à suivre, notamment s'il s'agit d'un aliment destiné à des enfants en bas âge bien nourris ou des aliments de renutrition à utiliser en début de traitement ou en phase de croissance rapide.

Le produit final, aliment complet ou supplément nutritionnel selon l'invention, se présente sous la forme d'une pâte visqueuse ou semi-visqueuse. Le produit final est faiblement soluble dans l'eau. Il s'agit d'un mélange constitué d'une phase pulvérulente, granulaire ou particulaire, anhydre ou à très faible teneur en eau contenue dans une phase lipidique pâteuse contenant un émulsifiant, de préférence la lécithine de soja, favorisant le mélange des ingrédients et ayant des propriétés anti-oxydantes. Ce mélange étant très peu soluble dans l'eau ne développe donc pas de pression osmotique notable. L'osmolalité reste inférieure à 200 mOsm/kg , de préférence inférieure à 100 mOsm/kg quand le produit est immergé dans une quantité d'eau quatre fois supérieure à son poids. Cette propriété persiste tant que le produit n'a pas été mis en suspension par agitation vigoureuse.

La consistance du produit final peut être choisie en fonction de son utilisation en modifiant la quantité de matière grasse introduite dans le mélange et en faisant varier la composition en acides gras de la matière grasse employée. La viscosité à 37°C de cet aliment complet ou supplément nutritionnel permet au produit d'être consommé par de jeunes enfants, en règle générale à partir de l'âge d'un an. Il peut facilement être avalé également par des patients dénutris ayant une force musculaire très diminuée.

De préférence la viscosité de l'aliment complet ou supplément nutritionnel selon l'invention est suffisamment faible pour pouvoir s'écouler s'il est contenu dans un emballage souple sur lequel on exerce une légère pression, tout en étant suffisamment élevée pour ne pas se répandre spontanément sous l'effet de son propre poids.

L'aliment complet ou supplément nutritionnel en raison de sa viscosité variable peut être moulé dans un emballage étanche de façon à réduire au maximum les quantités d'air résiduel présent dans l'emballage. Dans ce cas, la surface de contact de la composante lipidique de ce produit avec l'atmosphère ambiante est très réduite par rapport aux produits équivalents en poudre.

Par ailleurs, de par sa composition, l'aliment complet ou le supplément nutritionnel assure une conservation des substances fragiles qu'il renferme dans des conditions optimales étant donné qu'elles sont enrobées par une substance riche en lipides, ladite substance formant une barrière à l'oxygène, à l'humidité et entre les différents constituants susceptibles de réagir entre eux. Les propriétés protectrices de la matière grasse végétale utilisée sont renforcées par incorporation d'un émulsifiant tel que la lécithine de soja ayant des propriétés anti-oxydantes à un taux compris de préférence entre 2% et 5% de la matière grasse et éventuellement par un antioxydant tel que le tocophérol.

L'absence d'air à l'intérieur de cet aliment ou de ce supplément nutritionnel en augmente la densité. On peut admettre que 1 tonne de cet aliment complet ou supplément nutritionnel occupe environ un volume de 1 m³ alors qu'un produit équivalent en poudre occuperait un volume de 2 m³. Cette densité élevée facilite grandement le transport de cet aliment complet ou de ces suppléments nutritionnels par rapport aux produits équivalents en poudre.

Les aliments selon l'invention ont une densité énergétique supérieure à 400 kcal/100g, préférentiellement supérieure à 500 kcal/100g.

Ainsi, l'aliment complet ou supplément nutritionnel a une valeur énergétique très supérieure à celle des produits classiquement utilisés dans les régimes de renutrition obtenus après dilution d'un produit en poudre dans de l'eau, produits en poudre dont la mise en solution aqueuse impose une limite en terme de contenu énergétique en raison des problèmes d'hyper-osmolalité. Les produits en poudre classiques ont une osmolalité dépassant la limite de 290 mOsm/kg après dilution dans un milieu aqueux dès que la densité énergétique est supérieure à 100 kcal/100 ml.

L'aliment complet ou le supplément nutritionnel selon l'invention peut être préparé par un procédé suivant lequel on ajoute à la matière grasse additionnée d'émulsifiant, de préférence de la lécithine de soja, et éventuellement d'anti-oxydant, la totalité des produits pulvérulents ou sous forme particulaire ou granulaire, puis on malaxe dans un mélangeur dans un premier temps et ensuite dans un broyeur et on coule la composition résultante dans l'emballage.

Selon un mode de réalisation avantageux, le procédé de fabrication de l'aliment complet ou supplément nutritionnel conforme à l'invention comprend les étapes suivantes :
faire fondre à une température comprise entre 40°C et 60°C une matière grasse végétale pâteuse additionnée d'une substance émulsifiante, de préférence de la lécithine de soja, à un taux compris de préférence entre 2% et 5% de la matière grasse, et éventuellement additionnée d'antioxydant;
ajouter sous agitation à la matière grasse végétale fondue le mélange de vitamines et de sels minéraux;
incorporer ensuite chacun des ingrédients apportant les protéines et les glucides, se présentant sous la forme d'une poudre fine ou sous forme particulaire ou granulaire;
malaxer jusqu'à l'obtention d'une pâte homogène;
broyer dans un broyeur à haute vitesse;
puis couler la pâte ainsi obtenue dans les emballages.

Dans la présente invention, le contact entre les différents constituants et l'émulsifiant utilisé, de préférence la lécithine de soja, est facilité par un passage dans un broyeur à haute vitesse de rotation après un mélange initial.

De préférence, afin de faciliter le suivi du régime alimentaire, on utilise des emballages contenant la quantité d'aliment complet ou de supplément nutritionnel consommé lors d'un repas ou une quantité suffisante pour répondre aux besoins nutritionnels journaliers de la personne à laquelle ce produit doit être administré.

Les aliments conformes à l'invention sont faiblement solubles dans l'eau et ne génèrent pas d'osmolalité notable avant dispersion par agitation. Ils sont stables et résistants à l'oxydation.

L'aliment complet ou supplément nutritionnel est destiné à être consommé directement sous forme de pâte, sans dilution préalable dans de l'eau. Il peut être utilisé dans des programmes nutritionnels destinés notamment aux jeunes enfants, en règle générale après l'âge d'un an, aux personnes âgées ou aux adolescents.

Etant donné l'absence de dilution dans de l'eau, les problèmes de prolifération bactérienne, notamment à la suite d'une contamination bactérienne par l'eau ou les récipients dans lesquels les dilutions sont faites, sont écartés.

Après ajustement de leur formule, ces aliments complets peuvent servir à couvrir les besoins nutritionnels des enfants en bas âge, définis comme ayant plus de 12 mois et moins de 36 mois, dès lors qu'ils sont en état d'avaler un aliment se présentant sous forme de pâte et qu'ils sont capables de consommer spontanément les quantités d'eau dont ils ont besoin indépendamment de leur nourriture.

Après ajustement de leur formule pour tenir compte des besoins nutritionnels spécifiques apparaissant en cas de dénutrition, les aliments concernés par l'invention peuvent également servir d'aliments complets pour alimenter des patients sévèrement dénutris.

La présente invention va être illustrée à l'aide des exemples suivants qui ne sont pas limitatifs.

### EXEMPLES

### Exemple 1 : Aliment se présentant sous la forme d'une pâte ayant une composition nutritionnelle correspondant à celle des préparations de suite pour enfants en bas âge (norme CODEX STAN 156-1987, amendée en 1989).

On prépare dans un mélangeur un mélange contenant :
- 40 Kg de poudre de lait écrémé,
- 12,85 Kg de malto-dextrines,
- 10 Kg de sucre,
- 5 Kg de caséinate de magnésium,
- 32 Kg de matière grasse végétale lécithinée à 4%,
- 0,15 Kg de complément minéral et vitaminique dont la composition est donnée dans le tableau 1.

Le sens de rotation du mélangeur est inversé à chaque fois que l'on introduit un nouvel ingrédient (5 tours/minute jusqu'au versement de la moitié des ingrédients, puis 30 tours/minute ensuite avec une rotation prolongée au minimum 10 minutes après la fin du versement du dernier ingrédient). Lorsque tous les ingrédients ont été incorporés, on racle les parois du mélangeur à l'aide d'une pâle et on poursuit la rotation jusqu'à versement dans un broyeur (minimum 10 minutes de mélange).

La matière grasse végétale raffinée mise en oeuvre dans cet exemple présente le profil lipidique donné dans le Tableau 2. Elle est additionnée de 4% de lécithine de soja (rapportés au poids de la matière grasse) et également de 750 mg par kg de tocophérol.

Ce produit a une composition nutritionnelle correspondant aux normes nutritionnelles des préparations de suite pour enfants en bas âge, notamment en ce qui concerne son contenu en lipides et en protéines (Tableau 3) et en vitamines et minéraux.

Son emploi peut être envisagé pour les nourrissons âgés préférentiellement de plus de six mois, plus préférentiellement encore pour les jeunes enfants âgés de plus de un an pour qui la partie liquide d'un régime de sevrage peut être remplacée par un aliment pâteux. Cet aliment a l'avantage de pouvoir être utilisé pour alimenter les enfants non allaités au sein et ayant acquis les réflexes de déglutition leur permettant d'avaler un aliment sous forme de pâte et de remplacer les produits équivalents liquides.

**Tableau 1 :**

| **Mélange de vitamines et de minéraux utilisés dans l'exemple 1.** | |
|---|---|
| **Produits** | **Quantité** **(Pour 100 g d'aliment).** |
| Vitamine A | 450 µg |
| Vitamine D | 6 µg |
| Vitamine E | 20 mg |
| Vitamine C | 50 mg |
| Vitamine B1 | 250 µg |
| Vitamine B2 | 360 µg |
| Vitamine B6 | 280 µg |
| Vitamine B12 | 1 µg |
| Vitamine B9 | 25 µg |
| Vitamine PP | 1,5 mg |
| Acide pantothénique | 1,8 mg |
| Biotine | 10 µg |
| Vitamine K1 | 25 µg |
| Sulfate de fer (monohydrate) | 24 mg |
| Sulfate de zinc (monohydrate) | 4 mg |
| Iodate de potassium | 50 µg |

**Tableau 2 :**

| **Composition de la matière grasse employée dans l'exemple 1.** | | | |
|---|---|---|---|
| **Acide gras** | **Pourcentage** | **Acide gras** | **Pourcentage** |
| C6 | 0,10 | C18:1 | 35,70 |
| C8 | 1,40 | C18:2 | 13,85 |
| C10 | 1,20 | C18:3 | 5,70 |
| C12 | 16,00 | C20:0 | 0,45 |
| C14 | 5,50 | C20:1 | 0,8 |
| C16 | 8,90 | C22:0 | 0,20 |
| C17:0 | 0,05 | C22:1 | 0,20 |
| C18:0 | 9,25 | C24:0 | 0,10 |
| | | divers | 0,45 |

**Tableau 3**

| **Composition nutritionnelle donnée à titre indicatif de l'aliment complet décrit dans l'exemple 1** | | |
|---|---|---|
| | **Quantité pour 100g** | **g pour 100 kcal** |
| Energie | 540 kcal | - |
| Protéines | 18,5 g | 3,42 |
| Glucides | 43 g | |
| Lipides | 32 g | 5,9 |

### Exemple 2 : Supplément nutritionnel se présentant sous la forme d'une pâte grasse ne comportant comme source de protéines que des protéines de lait

On prépare un mélange contenant :
- 40 kg de matière grasse végétale,
- 37 kg de poudre de lait écrémé,
- 9,9 kg de lactoserum,
- 13 kg de saccharose,
- 0,10 kg de complément minéral et vitaminique dont la composition est donnée dans le tableau 4.

La technique de fabrication est la même que pour l'exemple 1. La matière grasse utilisée dans la préparation de cet aliment est la même que celle de l'exemple précédent. Elle est de la même façon enrichie en lécithine de soja et tocophérol. Ce produit peut s'utiliser tel quel, en complément d'un régime composé essentiellement à base de céréales.

Il peut également être mélangé à une bouillie mais dans ce cas perd les propriétés de résistance à la contamination bactérienne qui caractérise ce produit utilisé seul.

**Tableau 4 :**

| **Mélange de vitamines et de minéraux utilisés dans l'exemple 2.** | |
|---|---|
| **Produits** | **Quantité** **(Pour 100 g d'aliment)**. |
| Vitamine A | 0,55 mg |
| Vitamine D | 7 µg |
| Vitamine C | 33 mg |
| Vitamine B1 | 0.7 mg |
| Vitamine B2 | 0,80 mg |
| Vitamine B6 | 1 mg |
| Vitamine B12 | 1 µg |
| Vitamine B9 | 140 µg |
| Vitamine PP | 6 mg |
| Sulfate de fer | 25 mg |
| Sulfate de zinc | 10 mg |
| Sulfate de cuivre | 2 mg |
| Iodate de potassium | 150 µg |

### Exemple 3 : Aliment complet permettant de réalimenter un sujet dénutri.

Les quantités sont exprimées en pourcentage du mélange total effectué dans le pétrin.
Dans un pétrin, on verse 36% de matière grasse végétale telle que définie dans l'exemple 1, également enrichie en lécithine de soja et en tocophérol. On incorpore 1% du complexe de vitamines et sels minéraux décrit dans le Tableau 5 en le dispersant sur l'ensemble du mélange.
Puis on introduit successivement dans le pétrin tout en mélangeant:
- 39% de poudre de lait écrémé,
- 9% de lactosérum,
- 10,50% de malto-dextrines,
- 4% de sucre,
- 0,5% d'arôme caramel.

La technique de fabrication est la même que pour l'exemple 1.

La composition nutritionnelle de cet aliment complet correspond à celle du F100 de l'OMS avant dilution dans l'eau. Cette formule a une valeur énergétique de 545 kcal / 100 g, qui est plus de 5 fois supérieure à celle de la formule F100 après dilution. Elle se consomme telle quelle, sans dilution préalable dans de l'eau.

**Tableau 5 :**

| **Mélange de vitamines et de minéraux utilisés dans l'exemple 3.** | |
|---|---|
| **Produits** | **Quantité** **(Pour 100 g d'aliment).** |
| Vitamine A | 0,91 mg |
| Vitamine D | 16 µg |
| Vitamine E | 20 mg |
| Vitamine C | 53 mg |
| Vitamine B1 | 0,60 mg |
| Vitamine B2 | 1,80 mg |
| Vitamine B6 | 0,7 mg |
| Vitamine B12 | 1,80 µg |
| Vitamine B9 | 210 µg |
| Vitamine PP | 6 mg |
| Acide pantothénique | 3,1 mg |
| Biotine | 65 µg |
| Vitamine K | 21 µg |
| Sulfate de fer | 34 mg |
| Sulfate de zinc | 33mg |
| Citrate de magnésium | 3651mg |
| Sulfate de cuivre | 6,84 mg |
| Chlorure de potassium | 320 mg |
| Sélénite de sodium | 57 µg |
| Iodate de potassium | 186 µg |

## Revendications

1. Aliment complet ou supplément nutritionnel destiné à être consommé tel quel, sans addition d'eau, riche en lipides, contenant au plus 10%, de préférence au plus 5% et plus préférentiellement encore au plus 2% de son poids en eau, présentant une osmolalité inférieure à 100 mOsm/kg après immersion dans un volume d'eau quatre fois supérieur au sien, comprenant un mélange de produits de qualité alimentaire sous forme pulvérulente, granulaire ou particulaire, consistant en au moins un produit laitier en poudre, éventuellement au moins un produit apportant des glucides digestibles et un complément de vitamines et de sels minéraux, ledit mélange étant enrobé par au moins une substance riche en matière grasse végétale contenant un émulsifiant et éventuellement un anti-oxydant mais ne contenant ni la partie protéique, ni la partie glucidique non digestible, ni la partie minérale de graines d'oléagineux.

2. Aliment complet ou supplément nutritionnel selon la revendication 1, **caractérisé en ce que** le mélange de produits en poudre de qualité alimentaire, enrobé dans une matière grasse raffinée contenant un émulsifiant, contient :
- au moins un produit laitier en poudre apportant des protides choisi dans le groupe comprenant notamment le lait écrémé, le yaourt en poudre, la caséine, le lactosérum et leurs mélanges;
- éventuellement au moins un produit apportant des glucides choisi dans le groupe comprenant notamment le saccharose, le glucose, le fructose, la maltodextrine, le lait écrémé, le lactosérum et leurs mélanges;
- un mélange de vitamines et de sels minéraux de qualité alimentaire éventuellement enrobés par une substance inerte (cire ou alginate par exemple) le protégeant contre l'oxydation; et
- éventuellement des additifs de qualité alimentaire, choisis dans le groupe comprenant notamment des arômes, des colorants.

3. Aliment complet ou supplément nutritionnel selon la revendication 1 ou la revendication 2, **caractérisé par le fait que** la matière grasse végétale raffinée utilisée pour la préparation contient un émulsifiant, de préférence de la lécithine de soja à un taux compris de préférence entre 2% et 5%, ladite matière grasse végétale ayant une viscosité à 37°C comprise entre 180 et 720 kg/hr-m (50 et 200 centipoises), de préférence entre 288 et 648 kg/hr-m (80 et 180 centipoises), plus préférentiellement encore entre 360 et 504 kg/hr-m (100 et 140 centipoises).

4. Aliment complet ou supplément nutritionnel selon l'une quelconque des revendications 1 à 3, **caractérisé en ce qu'**il comprend un mélange :
- de 5 à 60%, de préférence de 20 à 50%, et plus préférentiellement encore de 35 à 40% de lait écrémé ;
- de 0 à 60%, de préférence de 2 à 30%, et plus préférentiellement encore de 5 à 10% de lactosérum ;
- de 2 à 55%, de préférence de 5 à 35%, et plus préférentiellement encore de 10 à 15% de substance glucidique à poids moléculaire élevé ;
- de 1 à 15%, de préférence de 2 à 10%, et plus préférentiellement encore de 3 à 5% de saccharose;
lesdits pourcentages étant exprimés en poids par rapport au poids total dudit aliment complet ou du supplément nutritionnel,
ledit mélange étant enrobé par 5 à 60%, de préférence de 20 à 50%, et plus préférentiellement encore de 35 à 40% de matières grasses végétales ne contenant ni la partie protéique, ni la partie glucidique non digestible, ni la partie minérale de graines d'oléagineux, ladite matière grasse étant enrichie à un taux rapporté à la matière grasse de 2 à 5% d'émulsifiant, de préférence de lécithine de soja.

5. Aliment complet ou supplément nutritionnel selon l'une quelconque des revendications 1 à 4, se présentant sous la forme d'une pâte visqueuse ou semi-visqueuse faiblement soluble dans l'eau développant une osmolalité inférieure à 100 mOsm/kg et de préférence inférieure à 50 mOsm/kg après immersion dans un volume d'eau quatre fois supérieur au sien tant que le produit n'a pas été dispersé par agitation.

6. Aliment complet ou supplément nutritionnel selon l'une quelconque des revendications 1 à 5, présentant une valeur énergétique supérieure à 400 kcal., préférentiellement supérieure à 500 kcal pour 100 g.

7. Procédé de préparation d'un aliment complet ou complément alimentaire selon l'une quelconque des revendications 1 à 6, **caractérisé en ce que** l'on ajoute dans de la matière grasse végétale pâteuse, préalablement enrichie en émulsifiant et éventuellement en anti-oxydant, des produits laitiers apportant les protides, éventuellement des produits apportant les glucides, des vitamines, des sels minéraux, éventuellement des additifs, puis que l'on coule dans l'emballage le produit ainsi obtenu.

8. Procédé de fabrication de l'aliment complet ou supplément nutritionnel selon l'une des revendications 1 à 7, comprenant les étapes consistant à:
faire fondre à une température comprise entre 40°C et 60°C une matière grasse végétale pâteuse additionnée d'une substance émulsifiante, de préférence de la lécithine de soja, à un taux compris de préférence entre 2% et 5% (rapportés au taux de matières grasses) et éventuellement additionnée d'un anti-oxydant;
ajouter sous agitation à la matière grasse végétale fondue le mélange de vitamines et de sels minéraux;
incorporer ensuite chacun des ingrédients se présentant sous la forme d'une poudre fine ou sous forme particulaire ou granulaire;
malaxer jusqu'à l'obtention d'une pâte homogène;
puis couler la pâte ainsi obtenue dans les emballages.

9. Procédé selon la revendication 7 ou 8, **caractérisé par le fait que** le mélange de ces différents constituants est homogénéisé par un passage dans un broyeur à haute vitesse de rotation.

10. Utilisation de l'aliment complet ou du supplément nutritionnel selon l'une quelconque des revendications 1 à 6 ou préparé selon l'une quelconque des revendications 7 à 9, dans des programmes nutritionnels de renutrition ou de supplémentation nutritionnelle ou pour pallier aux carences en vitamines ou en sels minéraux.

11. Utilisation selon la revendication 10, directement, sans dilution préalable dans de l'eau ou, bien éventuellement sous forme diluée, en complément d'un régime à base de céréales.

## Patentansprüche

1. Vollnahrungsmittel oder Nährergänzungsmittel, das zum Verzehr als solches ohne Hinzufügen von Wasser bestimmt ist, das reich an Lipiden ist, das höchstens 10%, vorzugsweise höchstens 5% und noch bevorzugter höchstens 2% seines Gewichtes an Wasser enthält, mit einer Osmolalität von weniger als 100 mOsm/kg nach Eintauchen in ein Wasservolumen, das viermal größer als sein eigenes ist, das eine Mischung von Produkten mit Nahrungsmittelqualität in Feinpulver-, körniger oder Partikelform enthält, die aus mindestens einem Milchpulverprodukt, ggf. mindestens einem verdauliche Kohlehydrate enthaltenden Produkt und einem Zusatz von Vitaminen und von Mineralsalzen besteht, wobei besagte Mischung von einer an pflanzlichem Fett reichen Substanz umhüllt ist, die einen Emulgator und ggf. ein Anti-Oxidans, jedoch weder den Proteinnoch den nicht verdaulichen Kohlehydrat-Anteil noch den mineralischen Anteil von Ölfrucht-Samen enthält.

2. Vollnahrungsmittel oder Nährergänzungsmittel nach Anspruch 1, **dadurch gekennzeichnet, dass** die Mischung von pulverförmigen Produkten in Nahrungsmittelqualität, eingehüllt in eine raffinierte Fettmasse mit einem Emulgator, enthält:
- mindestens ein Milchpulverprodukt mit Protiden, die aus der Gruppe ausgewählt sind, die insbesondere entrahmte Milch, Joghurtpulver, Kasein, Laktoserum und deren Mischungen umfasst;
- ggf. mindestens ein Produkt mit Kohlehydraten, die aus der Gruppe ausgewählt sind, die insbesondere Saccharose, Glukose, Fruktose, Maltodextrin, entrahmte Milch, Laktoserum und deren Mischungen umfasst;
- eine Mischung von Vitaminen und Mineralsalzen in Nahrungsmittelqualität, ggf. von einer inerten Substanz (z. B. Wachs oder Alginat) umhüllt, welche sie vor gegen Oxidation schützt; und
- ggf. Zusatzstoffe in Nahrungsmittelqualität, die aus der Gruppe ausgewählt sind, die insbesondere Aromen und Farbstoffe enthält.

3. Vollnahrungsmittel oder Nährergänzungsmittel nach Anspruch 1 oder Anspruch 2, **dadurch gekennzeichnet, dass** die für die Zubereitung verwendete raffinierte pflanzliche Fettmasse einen Emulgator enthält, vorzugsweise Soja-Lecithin mit einem Anteil zwischen 2% und 5%, wobei besagte pflanzliche Fettmasse bei 37 °C eine Viskosität zwischen 180 und 720 kg/h m (50 und 200 Zentipoise), vorzugsweise zwischen 288 und 648 kg/h m (80 und 180 Zentipoise) und noch bevorzugter zwischen 360 und 504 kg/h m (100 und 140 Zentipoise) hat.

4. Vollnahrungsmittel oder Nährergänzungsmittel nach einem der Ansprüche 1 bis 3, **dadurch gekennzeichnet, dass** es eine Mischung enthält aus:
- 5 bis 60%, vorzugsweise 20 bis 50% und noch bevorzugter 35 bis 40% entrahmter Milch;
- 0 bis 60%, vorzugsweise 2 bis 30% und noch bevorzugter 5 bis 10% Laktoserum;
- 2 bis 55%, vorzugsweise 5 bis 35% und noch bevorzugter 10 bis 15% Kohlehydrat-Substanz mit hohem Molekulargewicht;
- 1 bis 15%, vorzugsweise 2 bis 10% und noch bevorzugter 3 bis 5% Saccharose;
wobei besagte Prozentangaben in Gewicht bezogen auf das Gesamtgewicht des besagten Vollnahrungsmittels oder Nährergänzungsmittels ausgedrückt sind,
wobei die besagte Mischung von 5 bis 60%, vorzugsweise 20 bis 50% und noch bevorzugter 35 bis 40% pflanzlicher Fettmassen eingehüllt ist, welche weder den ProteinAnteil, noch den nicht verdaulichen Kohlehydrat-Anteil noch den mineralischen Anteil von Ölfrucht-Samen enthält, wobei besagte Fettmasse mit einem auf die Fettmasse bezogenen Emulgator-Anteil von 2 bis 5%, vorzugsweise Soja-Lecithin, angereichert ist.

5. Vollnahrungsmittel oder Nährergänzungsmittel nach einem der Ansprüche 1 bis 4, in Form einer viskosen oder halbviskosen, schwach wasserlöslichen Paste, mit einer Osmolalität von weniger als 100 mOsm/kg und vorzugsweise von weniger als 50 mOsm/kg nach Eintauchen in ein Wasservolumen, das viermal größer als sein eigenes ist, solange das Produkt nicht durch Rühren dispergiert wurde.

6. Vollnahrungsmittel oder Nährergänzungsmittel nach einem der Ansprüche 1 bis 5, das einen Energiewert von mehr als 400 kcal., vorzugsweise mehr als 500 kcal pro 100 g hat.

7. Verfahren zum Zubereiten eines Vollnahrungsmittels oder Nährergänzungsmittels nach einem der Ansprüche 1 bis 6, **dadurch gekennzeichnet, dass** man einer zuvor mit einem Emulgator und ggf. einem Anti-Oxidans angereicherten pastösen pflanzlichen Fettmasse Milchprodukte mit Protiden, ggf. Produkte mit Kohlehydraten, Vitamine, Mineralsalze, ggf. Zusatzstoffe hinzufügt und sodann das so erhaltene Produkt in eine Verpackung einfüllt.

8. Verfahren zum Zubereiten des Vollnahrungsmittels oder Nährergänzungsmittels nach einem der Ansprüche 1 bis 7, das die Schritte umfasst, die darin bestehen:
- bei einer Temperatur zwischen 40 °C und 60 °C eine pastöse pflanzliche Fettmasse mit zugefügter Emulgatorsubstanz, vorzugsweise Soja-Lecithin, mit einem Anteil von vorzugsweise zwischen 2% und 5% (bezogen auf den Fettanteil) und ggf. mit zugefügtem Anti-Oxidans schmelzen zu lassen;
- unter Rühren der geschmolzenen pflanzlichen Fettmasse die Mischung aus Vitaminen und Mineralsalzen hinzuzufügen;
- sodann jeden der Inhaltsstoffe einzumischen, die in Feinpulver-, Partikel- oder körniger Form vorliegen;
- zu kneten bis zum Erhalt einer homogenen Paste;
- sodann die so erhaltene Paste in die Verpackungen einzufüllen.

9. Verfahren nach Anspruch 7 oder 8, **dadurch gekennzeichnet, dass** die Mischung dieser unterschiedlichen Bestandteile mittels Durchlauf durch einen Zerkleinerer mit hoher Drehzahl homogenisiert wird.

10. Verwendung des Vollnahrungsmittels oder Nährergänzungsmittels nach einem der Ansprüche 1 bis 6, oder zubereitet nach einem der Ansprüche 7 bis 9, in wiederaufbauenden Ernährungs- oder Nährergänzungsprogrammen oder um Vitamin- oder Mineralsalz-Mangel auszugleichen.

11. Verwendung nach Anspruch 10, direkt, ohne vorheriges Auflösen in Wasser oder, ggf. auch in gelöster Form, als Ergänzung für eine Diät auf Getreidebasis.

## Claims

1. A complete food or nutritional supplement designed to be consumed as such, without addition of water, rich in lipids, containing not more than 10%, preferably not more than 5% and still more preferably not more than 2% water with respect to its own weight, having an osmolality of less than 100 mOsm/kg after immersion in a volume of water four times greater than its own, comprising a mixture of food grade products in powdered, granular or particulate form, consisting of at least one powdered dairy product, optionally at least one product providing digestible carbohydrates and a vitamin and mineral salt supplement, said mixture being coated with at least one substance rich in vegetable fat containing an emulsifier and optionally an antioxidant but containing neither the protein part, nor the indigestible carbohydrate part, nor the mineral part of oleaginous seeds.

2. The complete food or nutritional supplement as claimed in claim 1, **characterized in that** the mixture of food grade powdered products, coated with a refined fat containing an emulsifier, contains:
- at least one powdered dairy product providing proteins chosen from the group comprising in particular skimmed milk, powdered yoghurt, casein, whey, and mixtures thereof;
- optionally at least one product providing carbohydrates chosen from the group comprising in particular sucrose, glucose, fructose, maltodextrin, skimmed milk, whey, and mixtures thereof;
- a mixture of food grade vitamins and mineral salts optionally coated with an inert substance (wax or alginate for example) protecting it from oxidation; and
- optionally food grade additives chosen from the group comprising in particular flavorings and colorings.

3. The complete food or nutritional supplement as claimed in claim 1 or claim 2, **characterized in that** the refined vegetable fat used for the preparation contains an emulsifier, preferably soybean lecithin, in an amount preferably between 2% and 5%, said vegetable fat having a viscosity at 37°C between 180 and 720 kg/hr-m (50 and 200 centipoises), preferably between 288 and 648 kg/hr-m (80 and 180 centipoises), still more preferably between 360 and 504 kg/hr-m (100 and 140 centipoises).

4. The complete food or nutritional supplement as claimed in any one of claims 1 to 3, **characterized in that** it comprises a mixture :
- of 5 to 60%, preferably 20 to 50%, and still more preferably 35 to 40% skimmed milk;
- of 0 to 60%, preferably 2 to 30%, and still more preferably 5 to 10% whey;
- of 2 to 55% preferably 5 to 35%,and still more preferably 10 to 15% high molecular weight carbohydrate substance;
- of 1 to 15%, preferably 3 to 5% sucrose,
said percentages being expressed by weight relative to the total weight of said complete food or nutritional supplement, said mixture being coated with 5 to 60%, preferably 20 to 50% and still more preferably 35 to 40% of vegetable fat containing neither the protein part, nor the indigestible carbohydrate part, nor the mineral part of oleaginous seeds, said fat being enriched to a level, expressed relative to the fat, of 2 to 5% emulsifier, preferably soybean lecithin.

5. The complete food or nutritional supplement as claimed in any one of claims 1 to 4, provided in the form of a viscous or semiviscous paste sparingly soluble in water, developing an osmolality of less than 100 mOsm/kg and preferably less than 50 mOsm/kg after immersion in a volume of water four times greater than its own as long as the product has not been dispersed by stirring.

6. The complete food or nutritional supplement as claimed in any one of claims 1 to 5, having an energy value greater than 400 kcal, preferably greater than 500 kcal per 100 g.

7. A method for preparing a complete food or food supplement as claimed in any one of claims 1 to 6, **characterized in that** there are added to the pasty vegetable fat, enriched beforehand with emulsifier and optionally with antioxidant, dairy products providing proteins, optionally products providing carbohydrates, vitamins, mineral salts, optionally additives, and then the product thus obtained is poured into the packaging.

8. A method for manufacturing the complete food or nutritional supplement as claimed in one of claims 1 to 7, comprising the steps consisting in:
melting, at a temperature of between 40°C and 60°C, a pasty vegetable fat supplemented with an emulsifying substance, preferably soybean lecithin, in an amount preferably of between 2% and 5% (expressed in terms of the amount of fats), and optionally supplemented with an antioxidant;
adding, with stirring, to the molten vegetable fat the mixture of vitamins and mineral salts;
then incorporating each of the ingredients provided in the form of a fine powder or in particulate or granular form;
blending until a homogeneous paste is obtained;
and then pouring the paste thus obtained into packagings.

9. The method as claimed in claim 7 or 8, **characterized in that** the mixture of these different constituents is homogenized by passing through a grinder with a high rotating speed.

10. The use of the complete food or nutritional supplement according to any one of claims 1 to 6 or prepared according to any one of claims 7 to 9, in nutritional programs of renutrition or of nutritional supplementation or for compensating for vitamin or mineral salt deficiencies.

11. The use as claimed in claim 10, directly, without prior dilution in water or alternatively in dilute form, as a supplement for a diet based on cereals.
